# EUROPEAN PATENT APPLICATION

(11) **EP 2 461 598 A1**
(43) Date of publication of application: **06.06.2012**
(21) Application number: 11171888.8
(22) Date of filing: 29.06.2011
(51) Int. Cl.: H04N 21/2747, H04N 21/436, H04N 21/231

(54) **Server, replaying device, and replay control method**

(30) Priority: 03.12.2010 JP 2010270682
(71) Applicant: Kabushiki Kaisha Toshiba, Tokyo 105-8001 (JP)
(72) Inventor: Nagashima, Hirokazu, Tokyo, 105-8001 (JP)
(74) Representative: HOFFMANN EITLE

(57) **Abstract**

According to one embodiment, a server (3) includes: an allocator (309) configured to allocate a recording area before content is recorded and allocate a new recording area in an area in which the content is recorded in a past before the content is recorded to an end of the allocated recording area; a recorder (302) configured to record the content in the recording area allocated by the allocator (309); and a controller (305) configured to transmit a replay control instruction, wherein when the controller (305) determines that content in a recording area to be newly allocated is in replay state before the allocator (309) allocates the new recording area, the controller (305) transmits the replay control instruction to replay content recorded outside of the recording area to be newly allocated to a replaying device (2) that replays the content in the recording area to be newly allocated.

## Description

### FIELD

Embodiments described herein relate generally to a server, a replaying device, and a replay control method.

### BACKGROUND

Conventionally, a technique is disclosed in which when a digital media player (DMP) or a digital media renderer (DMR) makes a request to a digital media server (DMS) to pause the replay of content while the DMP or the DMR replays the content received from the DMS, the DMS stores therein a portion where the content under replay is paused, and when the DMP or the DMR makes a request for resumption to the DMS, the DMS starts the replay of the content from the stored portion.

A DMS continuously recording content using a ring buffer overwrites a recorded recording area with new content when no unrecorded recording area is left in the ring buffer. Therefore, when the recorded recording area in the ring buffer is overwritten with new content while a DMP or a DMR replays content stored in the ring buffer of the DMS, the front portion or whole of the content under replay may be lost. Specifically, the ring buffer is overwritten with new content while the DMP or the DMR pauses the replay of the content, and the paused portion of the content is deleted. In such process, when it is resumed, the replay of the content is to be resumed from the paused portion. However, the paused portion of the content is deleted, and thus, the DMS needs to return an error to the DMP or the DMR according to the Digital Living Network Alliance (DZNA).

The invention provides a server, a replaying device, and a replay control method that can provide content with no error to a user.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary schematic diagram of a structure of a content disclosure system according to an embodiment;
FIG. 2 is an exemplary block diagram of a structure of a player in the embodiment;
FIG. 3 is an exemplary block diagram of a structure of a server in the embodiment;
FIG. 4 is an exemplary flowchart indicating a flow of a process performed by a replay controller illustrated in FIG. 2 when the player replays content;
FIG. 5 is an exemplary flowchart indicating a flow of a process performed by the replay controller when the replay controller receives a replay control instruction from the server;
FIG. 6 is an exemplary diagram of a message displayed on a display illustrated in FIG. 2 controlled by a control reporting module illustrated in FIG. 2;
FIG. 7 is an exemplary flowchart indicating a flow of a process performed by a recorder illustrated in FIG. 3 for storing content in a ring buffer illustrated in FIG. 3;
FIG. 8 is an exemplary schematic diagram for explaining the storage of new content in the ring buffer;
FIG. 9 is an exemplary flowchart indicating a flow of a process for reserving a recording area;
FIG. 10 is an exemplary flowchart indicating a flow of a process for releasing a recording area in which content is stored;
FIG. 11 is an exemplary flowchart indicating a flow of a process performed by a digital media renderer (DMR) controller illustrated in FIG. 3 for controlling the player; and
FIG. 12 is an exemplary schematic diagram for explaining the control of the player by the DMR controller.

### SUMMARY

To overcome the problems and achieve the object mentioned above, according to an embodiment, a server includes: an allocator configured to allocate a recording area before content is recorded and allocate a new recording area in an area in which the content is recorded in a past before the content is recorded to an end of the allocated recording area; a recorder configured to record the content in the recording area allocated by the allocator; and a controller configured to transmit a replay control instruction, wherein when the controller determines that content in a recording area to be newly allocated is in replay state before the allocator allocates the new recording area, the controller transmits the replay control instruction to replay content recorded outside of the recording area to be newly allocated to a replaying device that replays the content in the recording area to be newly allocated.

According to another embodiment of the invention, a replaying device includes: a replaying module configured to replay content received from a server connected via a network; an instruction receiver configured to receive a replay control instruction to control replay of the content performed by the replaying module; and a replay controller configured to control the replay of the content performed by the replaying module according to the replay control instruction received by the instruction receiver.

According to still another embodiment of the invention, a replay control method includes: allocating a recording area before content is recorded and allocating a new recording area in an area in which the content is recorded in a past before the content is recorded to an end of the allocated recording area; recording the content in the allocated recording area; and transmitting a replay control instruction, wherein when content in a recording area to be newly allocated is determined to be in replay state before the new recording area is allocated, the replay control instruction to replay content recorded outside of the recording area to be newly allocated is transmitted to a replaying device that replays the content in the recording area to be newly allocated.

### DETAILED DESCRIPTION

Various embodiments will be described hereinafter with reference to the accompanying drawings.

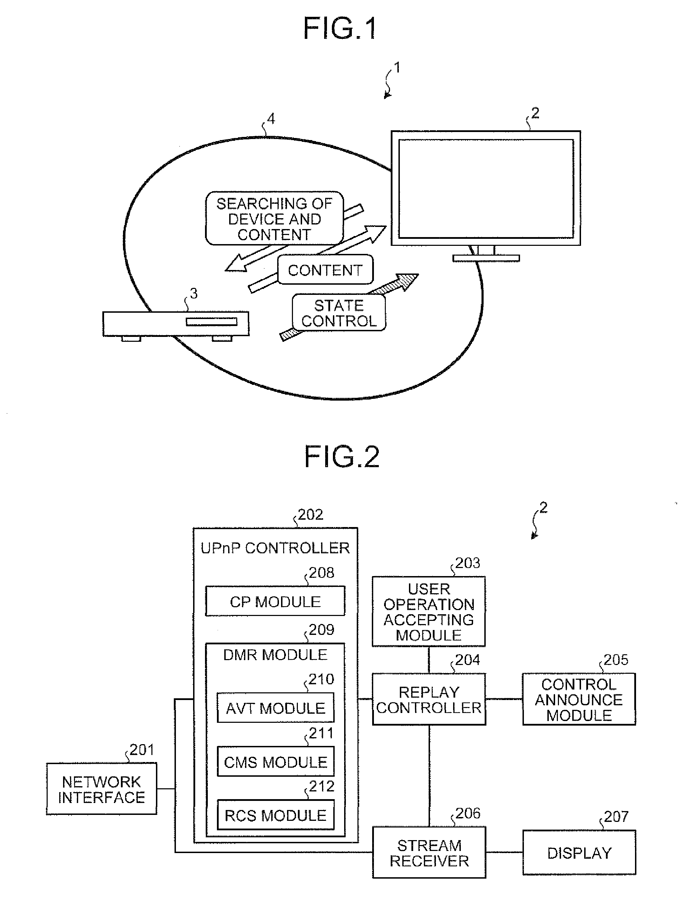

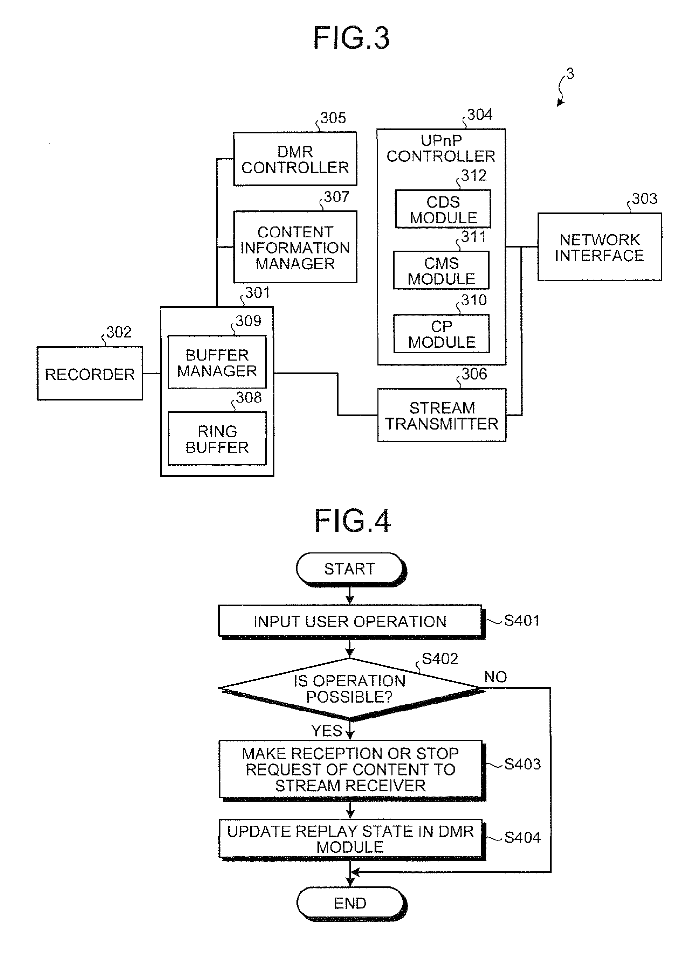

FIG. 1 is a schematic diagram of a structure of a content disclosure system according to an embodiment. A content disclosure system 1 according to the embodiment comprises: a server 3 that discloses digital content (hereinafter, referred to as content) on a network 4 and that operates as a digital media server (DMS) according to the Digital Living Network Alliance (DLNA) guideline; and a player 2 that replays and displays the content disclosed on the network 4 by the server 3 and that operates as a digital media player (DMP) or a digital media renderer (DMR) according to the DLNA. The player 2 can search the content stored in the server 3 connected with the network 4 and receive the searched content to replay it according to the DLNA guideline. In the embodiment, the server 3 controls the replay of the content performed by the player 2 to pause or resume the replay of the content. Therefore, a DMR module 209 (see FIG. 2) that enables the server 3 to control the replay of the content is mounted on the player 2 and a control point (CP) module 310 (see FIG. 3) that carries out an replay control instruction to control the replay of the content onto the DMR module 209 as a Universal Plug and Play (UPnP) action is mounted on the server 3.

FIG. 2 is a block diagram of a structure of the player in the embodiment. The player 2 according to the embodiment comprises a network interface 201, an UPnP controller 202, a user operation accepting module 203, a replay controller 204, a control reporting module 205, a stream receiver 206, and a display 207.

The network interface 201 governs communications with devices connected with the network 4. The UPnP controller 202 communicates with devices on the network 4 via the network interface 201. Specifically, the UPnP controller 202 comprises: a CP module 208 that searches the server 3 connected with the network 4 and searches content replayed by performing an UPnP action from the server 3 while utilizing M-Search or the like; and the DMR module 209 that enables an external CP module to control the replay of content performed by the player 2.

The DMR module 209 comprises an audio video transport (AVT) module 210, a connection manager service (CMS) module 211, and a rendering control service (RCS) module 212. The AVT module 210 obtains the replay state of content performed by the player 2 and provides the obtained replay state of content to the external CP module. The CMS module 211 performs matching whether the player 2 can replay the content in the server 3 searched by the CP module 208. The RCS module 212 obtains variable values (for example, volume and brightness) for replaying content and receives the replay control instruction of content from an external device (such as the server 3). The player 2 and the DMR module 209 need to have the same IP address so that the external CP module can control the replay of content performed by the player 2.

The user operation accepting module 203 accepts user operation from a remote controller or the like. The replay controller 204 obtains the user operation accepted by the user operation accepting module 203 and makes a reception request to the stream receiver 206 for content according to the obtained user operation. When the RCS module 212 receives the replay control instruction of content, the replay controller 204 determines whether the UPnP action (the replay control instruction of content) from the external CP module can be performed. If the replay controller 204 determines that the UPnP action can be performed, the replay controller 204 makes a reception request of the content or a stop request of reception of the content to the stream receiver 206. The replay controller 204 also controls the replay of content performed by the stream receiver 206 according to the replay control instruction of the content received by the RCS module 212. When the control reporting module 205 receives the UPnP action from the external CP module, the control reporting module 205 reports the reception of the UPnP action to a user by displaying messages on the display 207 through On-Screen Display (OSD) or by outputting sounds from a speaker (not illustrated) or other devices.

The stream receiver 206 outputs an HTTP GET command to the server 3 in response to the reception request of the content from the replay controller 204, receives the content disclosed on the network from the server 3, and replays the received content to make the display 207 display it. The display 207 is a liquid crystal display that displays the content replayed by the stream receiver 206. The display 207 also displays messages by the control of the control reporting module 205.

FIG. 3 is a block diagram of a structure of the server in the embodiment. The server 3 according to the embodiment comprises a content manager 301, a recorder 302, a network interface 303, an UPnP controller 304, a DMR controller 305, a stream transmitter 306, and a content information manager 307.

The content manager 301 comprises a buffer manager 309 and a ring buffer 308. The ring buffer 308 is a storage area for storing (recording) content. The buffer manager 309 allocates a recording area in the ring buffer 308 before content is recorded, and allocates a new recording area in an area in which content is recorded in the past (area in which content is already recorded) before the content is recorded to the end of the allocated recording area. In the embodiment, the buffer manager 309 sequentially allocates a recording area from an area with a starting address (beginning) of the ring buffer 308 before content is recorded and allocates an area with an address subsequent to the allocated recording area as a new recording area before the content is recorded to the end of the allocated recording area. When an area with an ending address (end) is allocated as a recording area, the buffer manager 309 again allocates the area with a starting address as a new recording area. In the embodiment, recording areas are allocated in the order of addresses of the ring buffer 308, which is not limited to this. Recording areas may also be allocated in a random fashion in the ring buffer 308. Moreover, when there is not enough free space in a hard disk drive (HDD) provided in the ring buffer 308, recording areas may be allocated from an area in which the earliest content is stored.

The buffer manager 309 stores addresses of recording areas in which content is stored in the ring buffer 308 and content information such as titles and sizes of the content stored in the ring buffer 308. When an area in which content is already stored is allocated as a new recording area, the buffer manager 309 changes the address of the recording area in which the content is stored. When the address of the recording area in which the content is stored is changed, the buffer manager 309 reports the change of the address of the recording area in which the content is stored to the DMR controller 305 and the content information manager 307.

The recorder 302 stores content in a new recording area allocated by the buffer manager 309 and overwrites content already stored with new content when the content is already stored in the new recording area allocated by the buffer manager 309.

The network interface 303 governs communications with devices connected with the network 4. The stream transmitter 306 transmits content stored in the ring buffer 308 to the player 2 via the network interface 303 in response to the HTTP GET command output from the stream receiver 206 of the player 2.

The UPnP controller 304 communicates with devices on the network 4 via the network interface 303. Specifically, the UPnP controller 304 comprises: the CP module 310 that searches the player 2 connected with the network 4 while utilizing M-Search or the like, obtains the replay state of content provided from the AVT module 210, and performs other operations; a content directory service (CDS) module 312 that obtains content information from the content information manager 307 and discloses the obtained content information to the devices connected with the network 4; and a CMS module 311 that performs matching whether the player 2 can replay the content stored in the ring buffer 308.

The DMR controller 305 obtains the replay state of content provided from the AVT module 210 of the player 2 via the CP module 310 of the UPnP controller 304 before the buffer manager 309 reports the change of the address of the recording area in which the content is stored (that is, before the buffer manager 309 allocates a new recording area in which content is already stored). The replay state obtained in this process is the replay state (for example, pause, under replay, and stop) of content in a recording area to be newly allocated by the buffer manager 309, which is performed by the stream receiver 206 of the player 2. When determining that the stream receiver 206 of the player 2 is in a replay state, the DMR controller 305 transmits a replays control instruction to replay the content stored outside of the recording area to be newly allocated by the buffer manager 309 to the player 2 that is in the replay state (in which content to be newly allocated is in a replay state).

The DMR controller 305 obtains the replay state of content provided from the AVT module 210 of the player 2 via the CP module 310 of the UPnP controller 304 before the buffer manager 309 reports the change of the address of the recording area in which the content is stored (that is, before the buffer manager 309 allocates a new recording area in which content is already stored) . The replay state obtained in this process is the replay state of content in a recording area to be allocated subsequent to the recording area to be newly allocated by the buffer manager 309, which is performed by the stream receiver 206 of the player 2. When determining that the content in the recording area to be allocated subsequent to the recording area to be newly allocated by the buffer manager 309 is paused, the DMR controller 305 transmits a replay control instruction to replay the content in the recording area to be allocated subsequent to the recording area to be newly allocated by the buffer manager 309 to the player 2 via the CP module 310.

When the buffer manager 309 reports the change of the address of the recording area in which the content is stored, the content information manager 307 obtains content information from the buffer manager 309 and stores therein the obtained content information so that the UPnP controller 304 can disclose the information to the exterior.

A process performed by the replay controller 204 when the player 2 replays content is described below with reference to FIG. 4. FIG. 4 is a flowchart indicating a flow of a process performed by the replay controller when the player replays content.

When the user operation accepting module 203 accepts an operation with respect to the player 2, such as play, stop, pause, fast forward, and fast rewind, operated by a user using a remote controller or the like, the operation is input into the replay controller 204 as a user operation (S401).

Subsequently, the replay controller 204 determines whether the player 2 can be operated according to the input user operation (S402). The player 2 may not be able to be operated according to the user operation depending on the state (for example, content is to be recorded) of the player 2. Therefore, if the player 2 cannot be operated according to the user operation (No at S402) , the replay controller 204 does not operate the player 2 according to the user operation and terminates the process.

On the other hand, if the player 2 can be operated according to the user operation (Yes at S402), the replay controller 204 makes a reception request of content or an stop request of reception of content to the stream receiver 206 (S403) and updates the replay state of content obtained by the DMR module 209 (AVT module 210) (5404) . For example, when the user operation is "replay", the replay controller 204 makes a request to the stream receiver 206 to receive the content selected by the user from the server 3 and updates the replay state of the content obtained by the DMR module 209 (AVT module 210) to "playing".

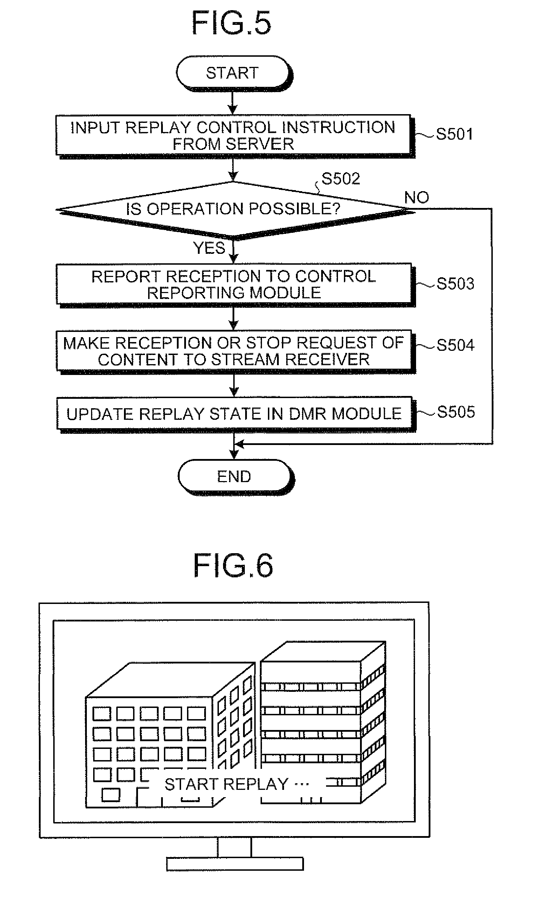

A process performed by the replay controller 204 when the replay controller 204 receives a replay control instruction from the server 3 is described below with reference to FIGS. 5 and 6. FIG. 5 is a flowchart indicating a flow of a process performed by the replay controller when the replay controller receives a replay control instruction from the server. FIG. 6 is a diagram of an example of a message displayed on the display controlled by the control reporting module.

When the RCS module 212 receives a play, stop, pause, fast-forward, or fast-rewind operation as a replay control instruction from the server 3, the received replay control instruction is input into the replay controller 204 (S501).

When the replay control instruction is input, the replay controller 204 determines whether the player 2 can be operated according to the input replay control instruction (S502) . The player 2 may not be able to be operated according to the replay control instruction depending on the state (for example, when a user operation is performed using a remote controller or the like) of the player 2. Therefore, if the player 2 cannot be operated according to the replay control instruction (No at S502), the replay controller 204 does not operate the player 2 according to the replay control instruction and terminates the process.

On the other hand, if the player 2 can be operated according to the replay control instruction (Yes at S502), the replay controller 204 reports the reception of the replay control instruction to the control reporting module 205 (S503). In response to this, as illustrated in FIG. 6, the control reporting module 205 displays a message on the display 207 to report the reception of the replay control instruction from the server 3 to a user. In addition to this, the control reporting module 205 may also report the reception of the replay control instruction from the server 3 to a user using sounds or the like.

Moreover, the replay controller 204 makes a reception request of content or a stop request of reception of content to the stream receiver 206 (S504) and updates the replay state of content obtained by the DMR module 209 (AVT module 210) (3505). For example, when the replay control instruction is "replay", the replay controller 204 makes a request to the stream receiver 206 to receive the content selected by a user from the server 3 and updates the replay state of the content obtained by the DMR module 209 (AVT module 210) to "playing".

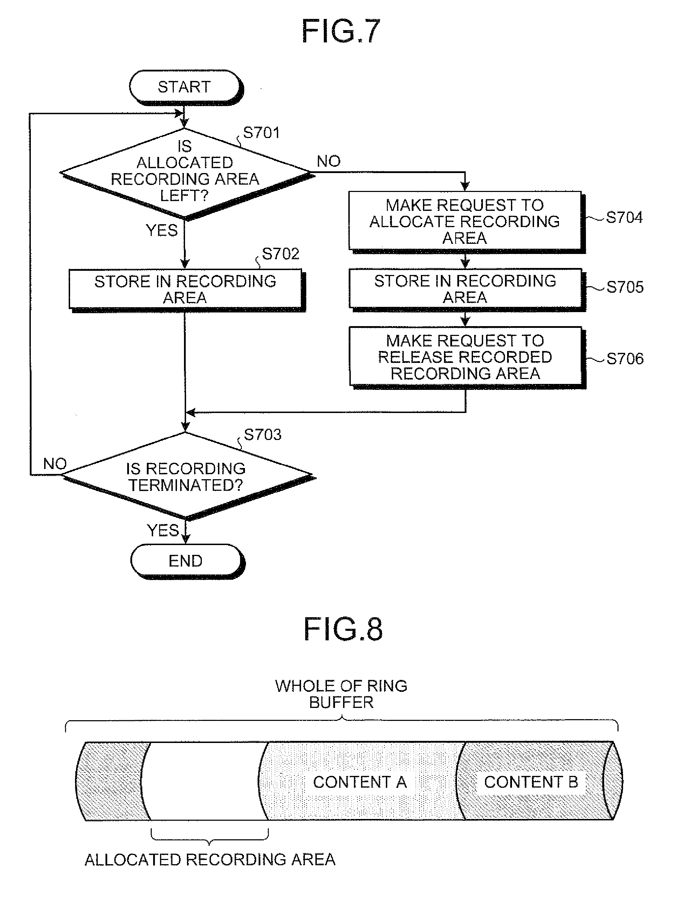

A process performed by the recorder 302 when content is stored in the ring buffer 308 is described below with reference to FIG. 7. FIG. 7 is a flowchart indicating a flow of a process performed by the recorder when content is stored in the ring buffer.

The recorder 302 determines whether a recording area allocated by the buffer manager 309 is left (that is, whether the allocated recording area is recorded to the end of the allocated recording area) when new content is recorded in the ring buffer 308 (S701) . If the recorder 302 determines the allocated recording area is left (Yes at S701), the recorder 302 stores content in the allocated recording area (S702). Subsequently, the recorder 302 determines whether the recording of the content is terminated (S703) . If the recording of the content is not terminated (No at S703), the system control returns to the process at S701.

On the other hand, if the recorder 302 determines the recording area allocated by the buffer manager 309 is not left (No at S701), the recorder 302 makes a request to the buffer manager 309 to allocate a recording area (S704) . When the buffer manager 309 allocates a recording area, the recorder 302 stores content in this allocated recording area (S705) . When the storing of the content in the allocated recording area is terminated, the recorder 302 makes a request to the buffer manager 309 to release the recording area in which the content is stored to disclose the content as new content to the player 2 connected with the network 4 (S706) .

FIG. 8 is a schematic diagram for explaining the storage of new content in the ring buffer. As described above, the recorder 302 stores content in each recording area allocated in a predetermined size by the buffer manager 309. When content is already stored in the recording area allocated by the buffer manager 309, the recorder 302 overwrites the content already stored, and therefore, the content already stored is deleted or downsized. For example, as illustrated in FIG. 8, when the beginning of content A is stored in the recording area allocated by the buffer manager 309, the beginning of the content A is overwritten with new content (content except for the content A), and the content A is downsized. Subsequently, the recorder 302 terminates the storing of the content. When the recording area in which the content is recorded is released, new content (content except for the content A and content B illustrated in FIG. 8) increase or the size of the content already stored increases (for example, the end of the content B is extended) in the ring buffer 308.

In a conventional server, when the recording area of the ring buffer 308 is overwritten with content in the manner as illustrated in FIG. 8, and the server receives a request to obtain the content thus overwritten from the player 2, the server cannot transmit the content to the player and needs to return an error. However, in the embodiment, the server 3 performs the following processes and thus prevents the returning of an error to the player 2.

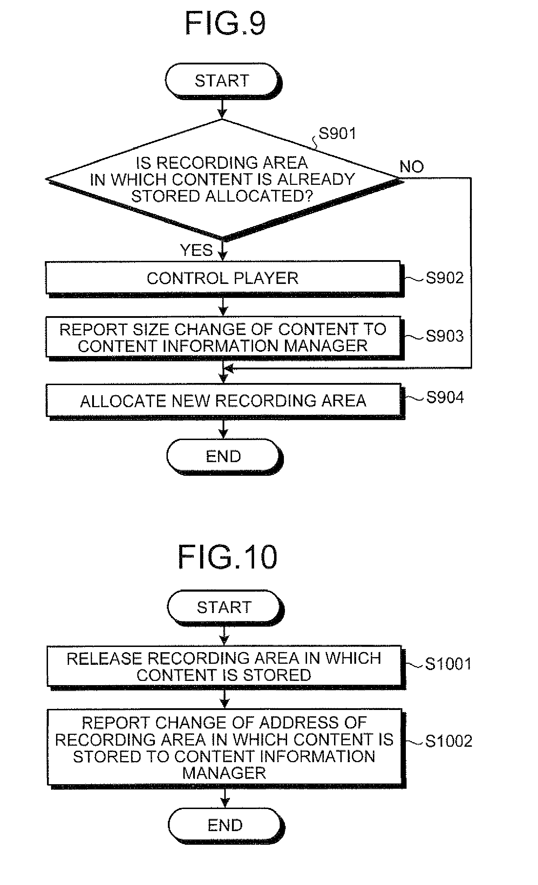

FIG. 9 is a flowchart indicating a flow of a process for reserving a recording area. When the buffer manager 309 receives a request to allocate a recording area from the recorder 302, the buffer manager 309 determines whether the buffer manager 309 allocates a recording area in which content is already stored (that is, an area in which content is recorded in the past) in the ring buffer 308 (S901).

If the buffer manager 309 determines the buffer manager 309 does not allocate the recording area in which content is already stored in the ring buffer 308 (No at S901), the buffer manager 309 allocates an area with an address subsequent to the address of the recording area in which content is already stored as a recording area in which new content is stored (S904).

On the other hand, if the buffer manager 309 determines the buffer manager 309 allocates the recording area in which content is already stored in the ring buffer 308 (Yes at S901), the buffer manager 309 makes a request to the DMR controller 305 to control the player 2 in order to prevent the occurrence of an error caused by overwriting the content already stored with new content (S902). Specifically, when the replay of content by the player 2 is paused at a portion where new content is overwritten, and then the content is resumed from the paused portion, the resumption may fail because the portion is overwritten with the new content. To prevent the resumption failure, the DMR controller 305 controls the player 2 in the embodiment.

Subsequently, the buffer manager 309 makes a request to the DMR controller 305 to control the player 2, then reports the change of the size of the content stored in the recording area to the content information manager 307 (S903), and allocates the recording area in which content is already stored as a recording area in which new content is stored (S904).

A process for releasing a recording area in which content is stored is described below with reference to FIG. 10. FIG. 10 is a flowchart indicating a flow of a process for releasing a recording area in which content is stored.

When the storing of content into a allocated recording area is terminated and the recorder 302 makes a request to release a recording area, the buffer manager 309 permits access to the recording area in which the content is stored and releases the recording area in which the content is stored (S1001) . The buffer manager 309 reports the change of the address of the recording area in which the content is stored to the content information manager 307 (S1002).

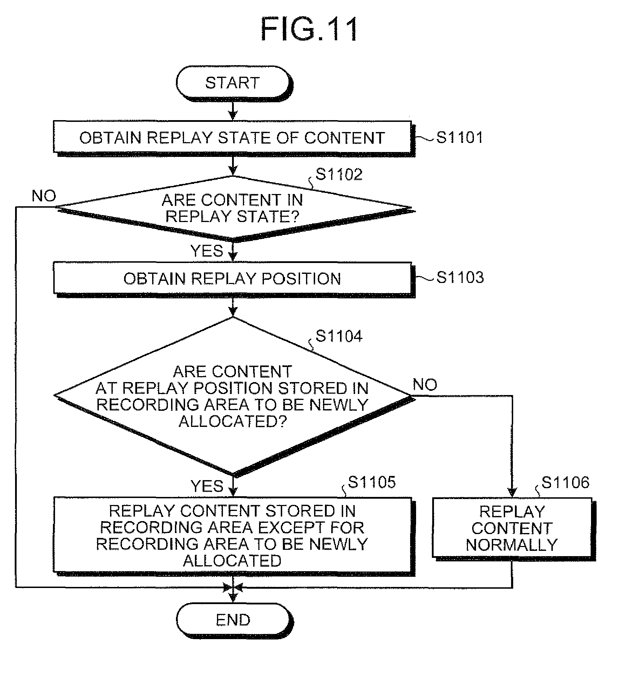

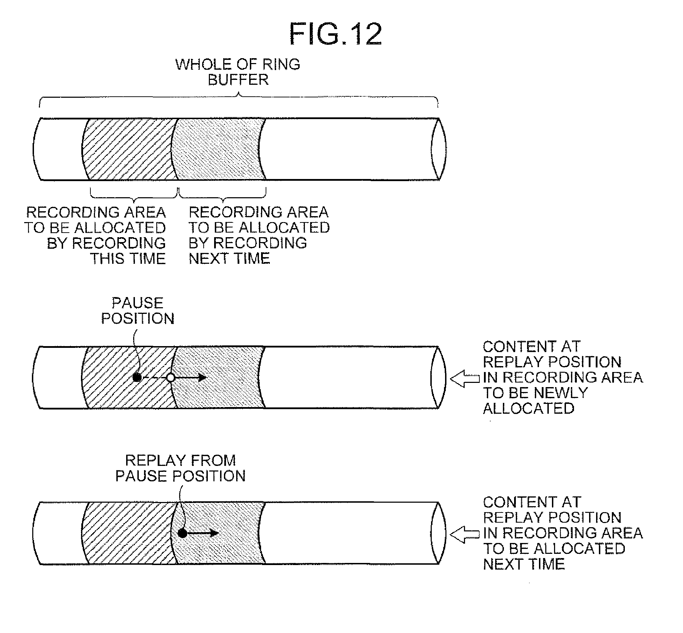

A process for controlling the player 2 by the DMR controller 305 is described below with reference to FIGS. 11 and 12. FIG. 11 is a flowchart indicating a flow of a process for controlling the player by the DMR controller. FIG. 12 is a schematic diagram for explaining the control of the player by the DMR controller. The DMR controller 305 stores therein the IP address of the player 2 from which the content stored in the ring buffer 308 is obtained in the past and performs the following processes on the player 2 having the same IP address with that of the DMR module 209 detected by the CP module 310.

When the buffer manager 309 makes a request to the DMR controller 305 to control the player 2, the DMR controller 305 obtains the replay state of content from the AVT module 210 of the player 2 (S1101). Subsequently, the DMR controller 305 determines whether the content is in a replay state in the player 2 (S1102). If the DMR controller 305 determines the content is not in the replay state in the player 2 (No at S1102), the DMR controller 305 terminates the process because no error occurs even when the content already stored in a recording area to be newly allocated are over written with new content.

On the other hand, if the DMR controller 305 determines the content is in the replay state in the player 2 (Yes at S1102), the DMR controller 305 obtains the replay position of the paused content or content under replay using the AVT module 210 (S1103). Subsequently, the DMR controller 305 determines whether the content at the obtained replay position are stored in the recording area to be newly allocated by the buffer manager 309 (S1104). Thus, the DMR controller 305 determines whether the content in the recording area to be newly allocated are in a replay state.

If the DMR controller 305 determines the content at the obtained replay position are stored in the recording area to be newly allocated (Yes at S1104), the DMR controller 305 transmits a replay control instruction to replay the content stored in a recording area except for the recording area to be newly allocated to the player 2 via the CP module 310 (S1105). For example, as illustrated in FIG. 12, when the replay of content performed by the player 2 is paused at a position where the content is stored in the recording area to be allocated this time by the buffer manager 309, the content stored in the recording area to be allocated this time are overwritten with new content and are deleted. Therefore, when the player 2 resumes the content, an error occurs. As illustrated in FIG. 12, in the embodiment, when the paused content is stored in the recording area to be allocated this time (that is, when the content in the recording area to be allocated by the buffer manager 309 are in a replay state), the DMR controller 305 controls the player 2. Thus, the DMR controller 305 transmits a replay control instruction to sequentially replay content, among the content stored in a recording area except for the recording area to be newly allocated, from the content stored in a recording area with the lowest address (content initially stored).

On the other hand, if the DMR controller 305 determines the content at the obtained replay position are not stored in the recording area to be newly allocated (No at S1104), the DMR controller 305 transmits a replay control instruction to keep normal replay by which the content at the obtained replay position are replayed to the player 2 via the CP module 310 (S1106) . For example, as illustrated in FIG. 12, when the replay of content performed by the player 2 is paused in the recording area to be allocated subsequent to the recording area to be newly allocated by the buffer manager 309, the recording area to be allocated subsequent is allocated as a new recording area subsequent to the recording area to be newly allocated and is overwritten with new content. However, when the content stored in the recording area except for the recording area to be newly allocated in a manner similar to the process described above are replayed, the replay position appears to be skipped in the eyes of a user. As illustrated in FIG. 12, in the embodiment, when the replay position of the paused content is in the recording area to be allocated subsequent to the recording area to be newly allocated (that is, when the content in the recording area to be allocated subsequent to the recording area to be newly allocated by the buffer manager 309 are in a replay state), the DMR controller 305 transmits a replay control instruction to replay the content in the recording area to be allocated subsequent, to the player 2 via the CP module 310. Thus, the DMR controller 305 seamlessly provides content to a user.

As described above, the player 2 according to the embodiment receives the content stored in the ring buffer 308 from the server 3 via the network 4. The player 2 comprises the stream receiver 206 that replays the received content, the CP module 208 that receives a replay control instruction to control the replay of the content from the server 3, and the replay controller 204 that controls the replay of the content performed by the stream receiver 206 according to the received replay control instruction. The server 3 according to the embodiment comprises: the ring buffer 308 that is a storage area for storing content; the buffer manager 309 that allocates a recording area before the content is recorded and allocates a new recording area in which content is allocated in the past before the content is recorded to the end of the allocated recording area; the recorder 302 that stores content in the recording area allocated by the buffer manager 309; and the DMR controller 305 that transmits a replay control instruction to replay the content stored in an area outside of the recording area to be newly allocated to the player 2 when the content in the recording area to be newly allocated is determined to be in a replay state before the buffer manager 309 allocates a new recording area. Accordingly, the server 3 can control the player 2 and can be prevented from replaying the content at the replay position already deleted. Therefore, even when the content in the server 3 are deleted while the content is paused or under play by the player 2, the content can be provided to a user with no error.

A computer program executed by the player 2 and the server 3 in the embodiment is previously built in a read-only memory (ROM) or the like to be provided. The computer program executed by the player 2 and the server 3 in the embodiment may be configured to be recorded in a recording medium capable of being read by a computer, such as a compact disc-read-only memory (CD-ROM), a flexible disk (FD), a CD recordable (CD-R), and a digital versatile disk (DVD), as files in an installable format or executable format to be provided.

The computer program executed by the player 2 and the server 3 in the embodiment may be configured to be provided by storing the program in a computer connected to a network such as the Internet and downloading the program via the network. The computer program executed by the player 2 and the server 3 in the embodiment may also be configured to be provided or distributed via a network such as the Internet.

The computer program executed by the player 2 and the server 3 in the embodiment has a module structure comprising the modules described above (the UPnP controller 202, the replay controller 204, the control reporting module 205, the stream receiver 206, the recorder 302, the UPnP controller 304, the DMR controller 305, the stream transmitter 306, the buffer manager 309, etc) . In the actual hardware, a central processing unit (CPU) (processer) reads the computer program from the ROM and executes it to load the modules into a main storage. Thus, the UPnP controller 202, the replay controller 204, the control reporting module 205, the stream receiver 206, the recorder 302, the UPnP controller 304, the DMR controller 305, the stream transmitter 306, the buffer manager 309, etc. are generated in the main storage.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A server (3) comprising:
an allocator (309) configured to allocate a recording area before content is recorded and allocate a new recording area in an area in which the content is recorded in a past before the content is recorded to an end of the allocated recording area;
a recorder (302) configured to record the content in the recording area allocated by the allocator (309); and
a controller (305) configured to transmit a replay control instruction, wherein when the controller (305) determines that content in a recording area to be newly allocated is in replay state before the allocator (309) allocates the new recording area, the controller (305) transmits the replay control instruction to replay content recorded outside of the recording area to be newly allocated to a replaying device (2) that replays the content in the recording area to be newly allocated.

2. The server (3) of Claim 1, wherein the controller (305) is configured such that when it determines that content in the recording area to be newly allocated is in replay state before the allocator (309) allocates the new recording area, the controller (305) transmits the replay control instruction to replay contents recorded outside of the recording area to be newly allocated in order from the first recorded content to the last recorded content to the replaying device (2).

3. The server (3) of Claim 1 or 2, wherein the controller (305) is configured such that when it determines that content in the recording area to be newly allocated is in pause state before the allocator (309) allocates the new recording area, the controller (305) transmits the replay control instruction to the replaying device (2).

4. The server (3) of Claim 3, wherein when the controller (305) determines that content in a recording area to be allocated subsequent to the recording area to be newly allocated is in pause state before the allocator (309) allocates the new recording area, the controller (305) transmits the replay control instruction to replay the content recorded in the recording area to be allocated subsequent to the recording area to be newly allocated to the replaying device (2).

5. The server (3) of one of Claims 1 to 4, wherein the controller (305) is configured such that when it determines that content in the recording area to be newly allocated is being replayed before the allocator (309) allocates the new recording area, the controller (305) transmits the replay control instruction to the replaying device (2).

6. A replaying device (2) comprising:
a replaying module (206) configured to replay content received from a server (3) connected via a network (4) ;
an instruction receiver (212) configured to receive a replay control instruction to control replay of the content performed by the replaying module (206); and
a replay controller (204) configured to control the replay of the content performed by the replaying module (206) according to the replay control instruction received by the instruction receiver (212).

7. The replaying device (2) of Claim 6, wherein the replay controller (204) is configured to determine whether the replaying device (2) can be operated according to the replay control instruction and to control the replay of the content performed by the replaying module (206) according to the replay control instruction when the replay controller (204) determines that the replaying device (2) can be operated according to the replay control instruction.

8. The replaying device (2) of Claim 6 or 7, further comprising a reporting module (205) configured to report reception of the replay control instruction from the server (3) to a user.

9. A replay control method comprising:
allocating a recording area before content is recorded and allocating a new recording area in an area in which the content is recorded in a past before the content is recorded to an end of the allocated recording area;
recording the content in the allocated recording area; and
transmitting a replay control instruction, wherein when content in a recording area to be newly allocated is determined to be in replay state before the new recording area is allocated, the replay control instruction to replay content recorded outside of the recording area to be newly allocated is transmitted to a replaying device (2) that replays the content in the recording area to be newly allocated.
